# EUROPEAN PATENT SPECIFICATION

(11) **EP 0 783 157 B1**
(45) Date of publication and mention of the grant of the patent: **12.11.2003**
(21) Application number: 96309570.8
(22) Date of filing: 31.12.1996
(51) Int. Cl.: G06K 7/10

(54) **Simplified assembly and automatic testing of components in electro-optical systems for reading coded indicia**
Vereinfachte Montage und automatischer Bauteiletest in elektro-optischen Systemen zum Lesen von kodierten Zeichen
Montage simplifié et essai automatique de composants dans un système électro-optique pour lire

(30) Priority: 05.01.1996 US 9691; 16.01.1996 US 585788
(43) Date of publication of application: 09.07.1997
(73) Proprietor: SYMBOL TECHNOLOGIES, INC., Holtsville, New York 11742-1300 (US)
(72) Inventor: Giordano, Joseph, Bayville, New York (US); Chew, Steven, East Northport, New York (US); Chen, Chang-Hong, Stony Brook, New York 11790 (US); Tu, Jean, Stony Brook, New York 11790 (US); Gofman, Yuri, Bohemia, New York 11716 (US); Stratienco, Daniela, Sound Beach, New York (US); Kehoe, Timothy, Smithtown, New York 11787 (US); Severino, Paul, Islip, New York 11751 (US); Shepard, Howard, Great River, New York (US); Harder, David, Liverpool, New York 13090 (US); Kahn, Joel, Rockville Centre, New York (US); Barile, John, Holbrook, New York (US); Doran, Robert, East Setauket, New York 11733 (US); Grabowski, Robert, Centerport, New York (US); Sanders, Robert, East Islip, New York 11730 (US); Barkan, Edward, Miller Place, New York (US)
(74) Representative: Roberts, Gwilym Vaughan

(56) References cited:
- EP-A- 0 367 298
- WO-A-94/27248
- DE-B- 2 921 927
- US-A- 4 607 156

## Description

This invention generally relates to electro-optical systems for reading indicia such as coded symbols and, more particularly, to simplifying the assembly and adjusting the components in such systems.

Electro-optical systems for reading coded indicia such as bar code symbols are well established in the art. See, for example, U.S. Patent Nos. 4,251,798; 4,387,297; and 4,409,470, as well as the many other U.S. patents issued to Symbol Technologies, Inc., the assignee of the instant application.

Thus, a typical system includes a light source, such as a laser diode, for emitting a light beam toward a symbol for reflection therefrom. The reflected light is detected by a light sensor, such as a pbotodiode, over a field of view. The light beam and/or the field of view is scanned by an oscillating scan drive, typically including a light reflector. The sensor generates an electrical signal indicative of the symbol being scanned. This electrical signal is thereupon processed in a well known manner, typically to identify the item bearing the symbol, and then using this identification for inventory or check-out purposes. These electrical and optical components are often mounted in a hand-held, portable head or housing.

The assembly of the various system components is labor intensive. Various components, for example, the photodiode, are soldered to a printed circuit board on which electrical circuitry, for example, the signal processing, control and drive circuitry are mounted. Typically, a flexible strip cable is soldered to the laser diode and the circuit board. Also, an electro-magnetic interference (EMI) shield is soldered to the circuit board. Many screws are used to secure various system components in place within the housing, and even the housing itself is composed of parts that are fastened together with screws.

Aside from the labor-intensive nature of assembling the components by soldering and by manually turning multiple screws, there is also the labor-intensive procedure of manually adjusting certain optical components. Optical adjustment among the light source, light sensor, light reflector, and scan drive is critical for proper system operation. At present, three adjustments are required to manually set the "alignment" of the optical sub-system. First, the power level of the laser diode is adjusted manually by the operator by holding a power meter in front of the laser beam and simultaneously manually adjusting a potentiometer on the circuit board. Second, the position or height of the laser beam is set by adjusting the position of a laser spot from the laser beam to the center of a scan mirror on the light reflector. This is accomplished by the operator manually turning an adjustment screw while watching the location of the laser spot on a video monitor that shows a zoomed-in picture of the reflector. Third, the sweep or amplitude of the scan drive is set by lowering a mirror in the path of the laser beam so as to reflect the laser beam onto a movable plate. On the plate are etched-in tolerances for the scan width (representing the amplitude). The operator manually adjusts a potentiometer on the circuit board until the scan width falls into predetermined specifications.

After these initial adjustments are performed in a test fixture, they must be manually verified after the optical sub-assembly is mounted in the housing in which they are to finally reside. These final adjustments are not guaranteed to take place (unit could be assembled without full alignment taking place) or not be fully within specifications. Sometimes, re-work is necessary to correct the alignment, thereby leading to increased manufacturing cost and complexity.

International patent application no. WO94/27248 describes a barcode scanner which includes a printed circuit board on which optical and electronic components of the unit are mounted. European patent application no. 0367298 describes a scanning head in which a laser diode is mounted on a printed circuit board.

It is a general object of this invention to simplify the mounting of components in electro-optical systems for reading coded indicia.

It is still another object of this invention to reduce overall manufacturing cost and complexity in such systems.

The invention is set out in the independent claims appended hereto. Preferred features are set out in the dependent claims.

In keeping with these objects and others which will become apparent hereinafter, a light source component for emitting a light beam, a light sensor component for detecting light from indicia over a field of view, and a light reflector component used for scanning at least one of the light beam and the field of view, are supportably mounted on a chassis that, in turn, is snap-mounted in a housing. The chassis is used with an automated test fixture for automatically adjusting the laser power level, the laser beam height and the amplitude of the scan drive, thereby effectively reducing, if not eliminating, all operator judgment in aligning the optical sub-assembly and guaranteeing that all necessary adjustments will he made during manufacture and assembly. The automated fixture provides a higher level of accuracy and repeatability, and the need to re-work or verify the alignment in the housing should all but be eliminated.

In the preferred embodiment, the housing includes a cover that overlies, and is snap-mounted to, a housing shell in an assembled condition of use. A printed circuit board is mounted in the housing, preferably by being snap-mounted un the chassis. The cover has formations that clamp the circuit board to the chassis in the assembled condition of use. Also, the cover has additional formations for securing the position of an optical block or casing in which the light source component is mounted.

Other preferred features of the invention include heating a light - transmissive window through which the light beam and the reflected light pass in opposite directions to prevent fogging, providing EMI protection for the light sensor component as well as good heat dissipation for the light source component, detachably mounting a boot or cap on the end of a handle connected to the shell, providing a cable connected to the housing with strain relief, self-supporting the housing on a horizontal support surface, providing the cover with light-absorbing and shock-absorbing properties, optimizing communication between a user and the system by improved visual, audio and vibratory status indicators for indicating system operation, providing a novel dual-finger trigger, pivoting the trigger at a new location on the housing, and forming certain system components with features to allow easy assembly.

The novel features which are considered as characteristic of the invention are set forth in particular in the appended claims. The invention itself, however, as to its construction, together with additional objects and advantages thereof, will be best understood from the following description of specific embodiments when read in connection with the accompanying drawing.

The invention will now be described, by way of example, with reference to the drawings of which:
Fig. 1 is a perspective exploded view of a hand-held housing of a system for electro-optically reading coded indicia according to this invention;
Fig. 2 is a front elevational view of the housing of Fig. 1 after assembly;
Fig. 3 is a sectional view taken on line 3-3 of Fig. 2;
Fig. 4 is a top plan view taken on line 4-4 of Fig. 3 with the cover removed.
Fig. 5 is a sectional view taken on line 5-5 of Fig. 4.
FIG. 6 is a sectional view taken on line 6-6 of FIG. 3;
FIG. 7 is a sectional view taken on line 7-7 of FIG. 4;
FIG. 8 is a sectional view of an acoustic resonator for use with the housing of FIG. 1;
FIG. 9 is a sectional view of a modified window construction for use with the housing of FIG. 1; and
FIG. 10 is a perspective view of a component of the scan drive.

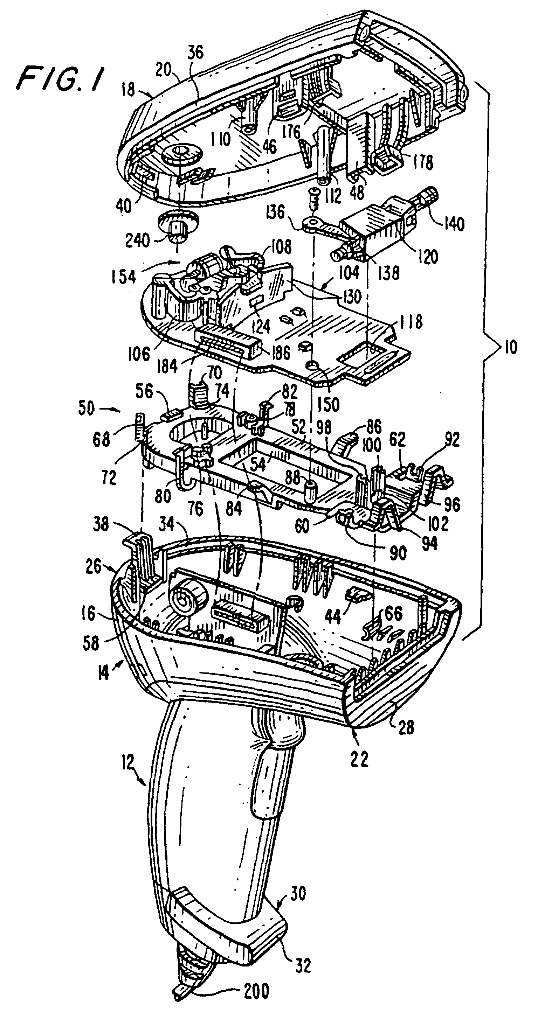

Referring now to the drawings, reference numeral 10 in FIG. 1 generally identifies a lightweight, portable head or housing for use in a system for electro-optically reading coded symbols, such as one-dimensional or two-dimensional bar code symbols. Such symbols comprise a series of bars and spaces of varying widths arranged in a pattern which is decodable to a numerical representation characteristic of a product bearing the symbol.

The housing 10 is generally gun-shaped and has a handle 12 and a body or barrel 14. The handle has a cross-sectional dimension which can conveniently fit in the palm of a user's hand. The barrel 14 includes a lower barrel part or shell 16, which, in FIG. 1, is shown to be integral with the handle 12, as well as an upper barrel part or cover 18. The handle and shell are constituted by a synthetic plastic material, preferably injection-molded. The handle is hollow and has opposite open ends. The cover 18 includes an inner liner constituted of an injection-molded synthetic plastic material and preferably being colored black to minimize internal light reflections, and is overmolded with an exterior canopy 20 constituted of a shock-absorbing material, typically rubber.

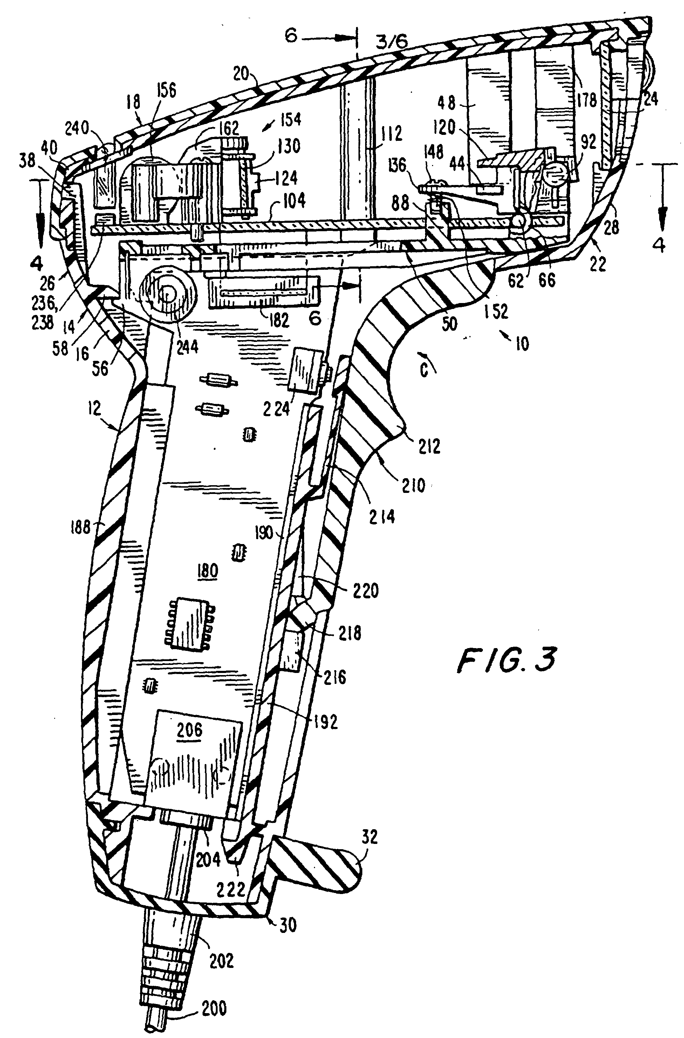

The cover is, as shown in FIG. 3, assembled in a condition of use on the shell and bounds therewith an interior space for accommodating various system components, as described below. The barrel 14 has a front region 22 at which a light-transmissive window 24 is mounted between the shell and the cover, and extends generally along a barrel axis to a rear region 26. The handle is closer to the rear region and extends away from the barrel along a handle, axis that forms an obtuse angle with the barrel. The front region 22 has an inclined front wall or front rest 28. A rubber boot or end cap 30 is mounted at the far end of the handle and has a forwardly-extending rear rest 32 which, together with the front rest 28, form a stable platform for supporting the housing on a generally horizontal support surface when the housing is not being held in one's hand.

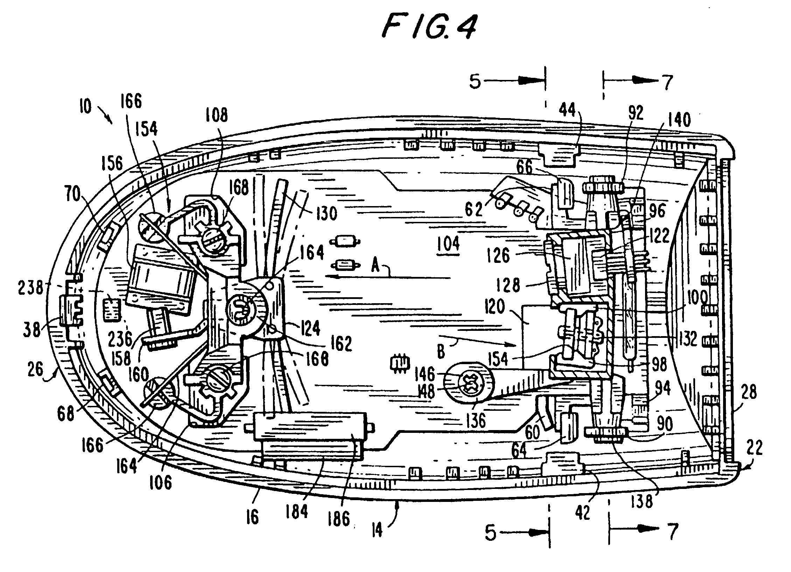

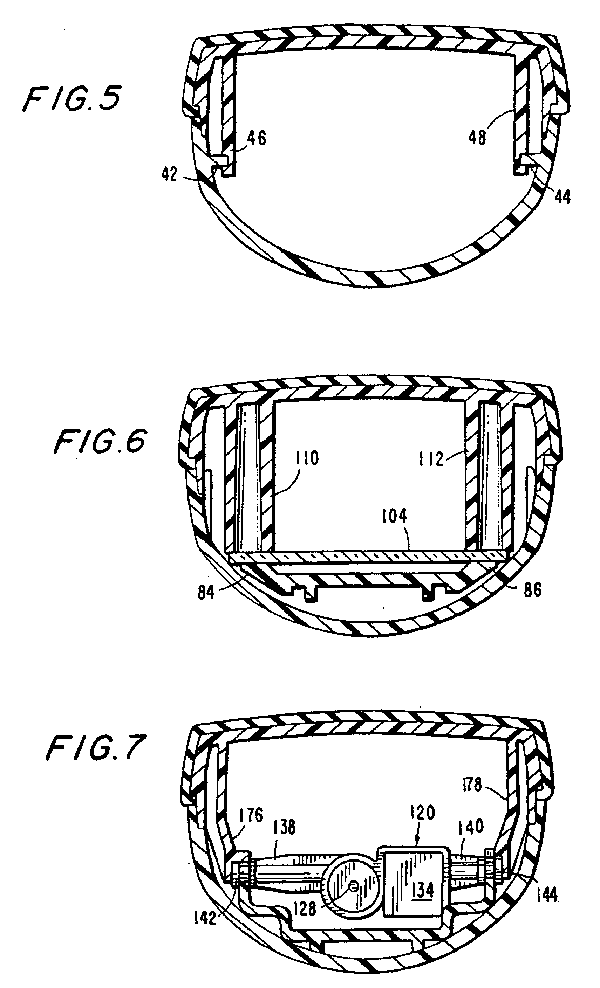

The cover has a peripheral rim 36 which, as shown in FIG. 1, fits over a corresponding peripheral rim 34 of the shell. A rear, resilient upright latch 38 integral with the shell is inserted into a rear latching hole 40 extending through the liner of the cover prior to pivoting the cover closed onto the shell in a clamshell manner. A pair of tabs 42, 44 (see FIGS. 4 and 5) integral with the shell and spaced transversely apart are engaged with snap-action by a corresponding pair of latching arms 46, 48 integral with and extending downwardly of the cover in the assembled condition.

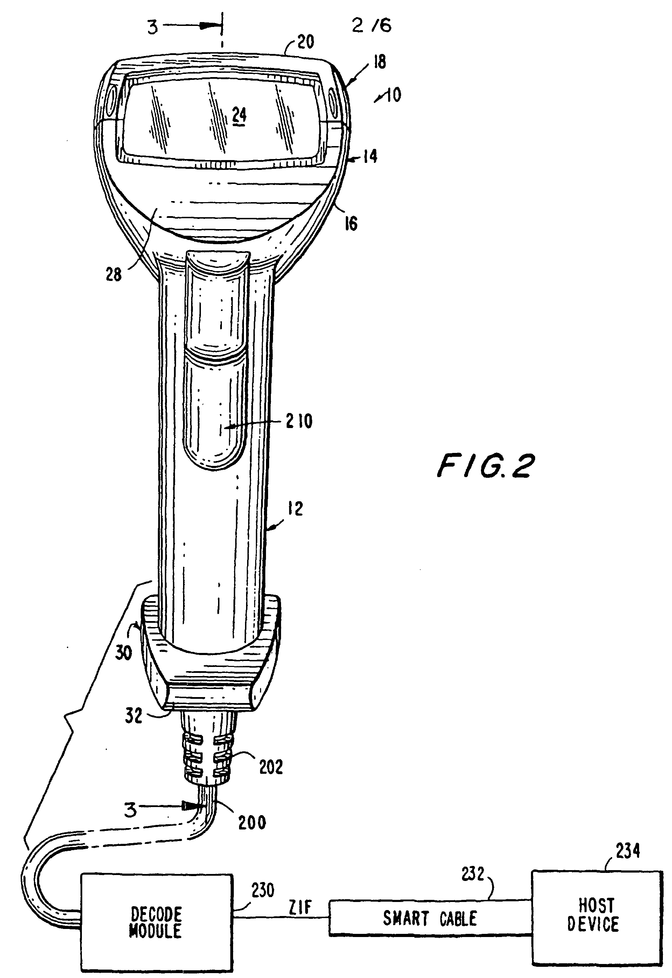

A chassis 50 is mounted between the shell and the cover at an inclined orientation relative to the horizontal (FIG. 2). As best shown in FIG. 1, the chassis is a one-piece molded synthetic plastic material part, preferably colored black to minimize internal light reflections within the housing. The chassis has a main rectangular body portion 52 formed with a rectangular cutout 54, a rear end having a resilient latch 56 that extends downwardly and engages a rear heel tab 58 integral with the shell with a snap action (see FIG. 3), and a front end having a pair of co-linear trunnions or stub shafts 60, 62 that are journaled in bearings 64, 66 integral with the shell. The bearings are rearwardly open so that the chassis is mounted on the shell by first forwardly inserting the stub shafts 60, 62 into the bearings 64, 66 and then, by pressing the rear end of the chassis downwardly until the latch 56 snappingly engages the rear heel tab 58.

As best seen in FIG. 1, the chassis 50 also has a pair of spaced-apart upright supports 68, 70 having ledges 72, 74 at the rear end; a pair of spaced-apart threaded cylindrical bosses 76, 78; a pair of spaced-apart cylindrical sleeves 77, 79; a pair of oppositely directed resilient latch elements 80, 82; a pair of side wings 84, 86 at opposite sides of the chassis; a single threaded post 88 at one side of the chassis; a pair of spaced-apart split catches 90, 92; a pair of spaced-apart front resilient arms 94, 96; a pair of channel-shaped holders 98, 100; and a support formation 102. The functions of these various parts are described below. As described so far, the chassis is securely snap-mounted in place onto the shell.

A generally planar printed circuit board 104 is snap-mounted onto the chassis. The *rear* end of the board 104 rests on the ledges 72, 74 of the supports 68, 70. The latch elements 80, 82 extend through a pair of apertures 106, 108 formed through the board, and snappingly engage the edges of the board bounding the apertures. The board rests on the side wings 84, 86. As best seen in FIGS. 1 and 6, the cover has a pair of clamping posts 110, 112 that press the sides of the board 104 against the side wings 84, 86 and anchor the board in position. The front end of the board is clamped at its front edges between the resilient arms 94, 96. Electronic circuitry is mounted on the board, but has been substantially removed from the drawings so as not to unduly encumber them. For example, no circuitry is shown in FIGS. 5 and 6.

It is one feature of this invention to support various optical components directly on the chassis, and not on the board as was conventionally done in the prior art. Indeed, this invention mounts these components at an elevation above the board. This overhead or top-mounted configuration enables easy assembly and access to those optical components requiring adjustment, maintenance and/or replacement thereafter.

As best seen in FIG. 4, an optical block or casing 120 includes a first compartment for receiving a light source 122, e.g., a laser diode, for emitting a light beam at a rated power level in a rearward direction along the path indicated by arrow A toward a generally planar scan mirror 124 for reflection therefrom along an opposite forward direction through the window 24 outwardly of the housing. A focusing lens 126 and an aperture stop 128 together focus the emitted light beam to a scan spot having a given size in a range of working distances relative to a reference plane at which an indicium or symbol to be read is located. Light reflected from the indicium re-enters the housing through the window 24 and is collected by a generally concave spherical collection mirror 130, which is mounted for joint movement with the scan mirror 124, for reflecting the returned light along the path indicated by arrow B along the forward direction to a light detector, e.g., a photodiode 132 supported from behind by the support formation 102. An optical filter 134 is positioned between the channel-shaped holders 98, 100 in front of the detector to suppress and remove ambient light. The detector and the filter are mounted in a second compartment mounted side-by-side with the first compartment.

The casing 120 has an offset positioning arm 136 and a pair of co-linear extensions 138, 140 extending in opposite directions away from each other. Each extension 138, 140 has a cylindrical shaft portion 142, 144 of reduced diameter (see FIG. 7) which is snap-fitted into the catches 90, 92 of the chassis. The casing is free to tilt and rotate slightly about the axis along which the extensions lie as the positioning arm 136 is adjusted. This is effected by providing an elongated slot 146 in the arm 136, and by tightening an adjustment screw 148 into the threaded post 88. As best shown in FIGS. 1 and 7, the cover also has a pair of downwardly-extending retainers 176, 178 which overlie and insure that the shaft portions 142, 144 do not escape from their respective catches 90, 92 in the assembled condition of use.

As best seen in FIG. 1, the post 88 extends with mechanical clearance through a hole 150 in the board 104. A coil spring 152 surrounding the post 88 is captured under tension between the arm 136 and the chassis. Turning the screw 148 causes the height of the casing to be adjusted so that the emitted light beam can be aimed at a preselected spot on the scan mirror 124.

It will be noted that the casing 120 is mounted on the chassis at the catches 90, 92 and at the post 88. The laser diode and its associated optics are mounted within the casing 120 and, hence, are also supported on the chassis. The detector and its associated filter are mounted directly on the chassis by the elements 98, 100, 102 all of which extend with mechanical clearance through a front cutout 118 in the printed circuit board 104. Hence, none of these optical elements are mounted on the board itself.

The casing 120 is constituted of an all-metal, one-piece construction. This provides excellent heat dissipation for the laser diode, and excellent EMI protection for the detector, all without having to provide and/or mount separate heat sinks and shields.

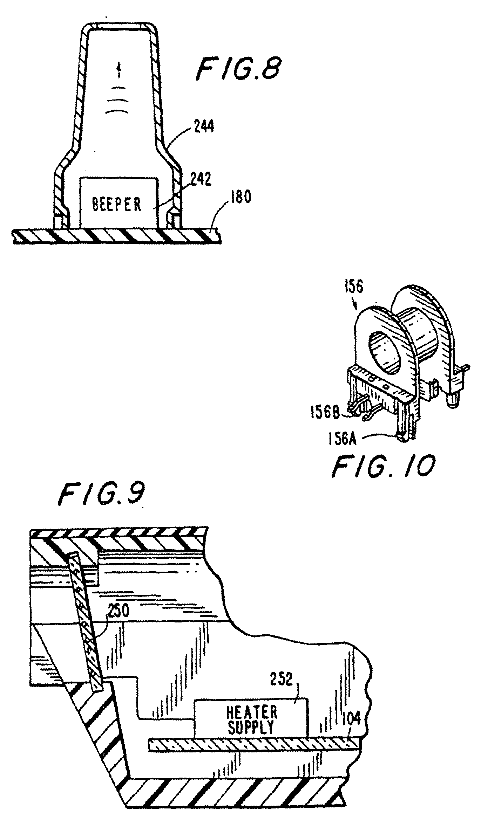

A scan drive assembly 154 is used to oscillate the scan mirror 124 and the collecting mirror 130, together collectively referred to as the "light reflector". An electro-magnetic coil 156 is mounted on the board 104. FIG. 10 depicts the coil in isolation, wherein the coil is advantageously provided with bent legs 156A, B to facilitate assembly. A permanent magnet 158 is mounted on a bracket 160 that is suspended from a rear part of a frame 162. The bracket 160 is supported by a thin, flexible strip of film 164, preferably Mylar™. Opposite ends of the film 164 are supported by rear mounts 166. The light reflector is mounted on the bracket 160. The bracket 160 is oscillatable in opposite circumferential directions about a drive shaft 164 also inclined perpendicular to the board 104. The frame 162 has bottom positioning pins for insertion into the sleeves 77, 79 of the chassis. As shown in FIG. 4, the bosses 76, 78 extend with mechanical clearance through holes 106, 108 in the board 104. A pair of screws 166, 168 is inserted through the frame 162 and threadedly engage the bosses 76, 78. Hence, the the frame is directly mounted on the chassis, and the light reflector is mounted on the frame.

In operation, the coil 156 is energized by an alternating excitation voltage which creates a magnetic field which cyclically attracts the permanent magnet 158 and draws it into the coil. This movement is translated by the bracket 160 to the light reflector.

As described so far, the optical components of the system, i.e., the light emitter 122, the light sensor 132, the focusing lens 126, the optical filter 132, and the light reflector 124, 130 are all supported at pre-selected locations on the chassis. These optical components are mountable and removable from above the board 104. These optical components are easily accessible and adjustable.

For example, as previously mentioned, turning the screw 148 causes the height of the casing 120 to be adjusted so that the emitted light beam can be aimed at a preselected spot on the scan mirror 124. This is performed in a test fixture by positioning two photodetectors (placed one on top of the other, divided by 0.060" black area) in the path of the laser beam. Using an algorithm based on feedback from the photodetectors, a tool will automatically turn the screw 148 to adjust the beam height until there is equal power detected on both photodetectors. This will then represent the position of the center of the scan mirror.

The power level of the laser source 122 is adjusted by positioning a power meter in the path of the laser beam and using an algorithm based on the feedback experienced, to step a digital potentiometer located on the circuit board 104 to reach the desired laser power setting. The electrical stepping of the digital potentiometer is done via test points on the bottom of the board 104.

The motor amplitude of the scan drive is set by scanning a predefined coded bar code symbol made of 10, 20 and 30 mil elements. Based on the feedback of the number of 20 mil elements scanned and the spot speed from this symbol, the motor amplitude can be set via a digital potentiometer through pogo pins making connection to the bottom of the circuit board 104.

The automated test fixture used to perform the adjustments detailed above will effectively eliminate all operator judgment in setting the optical alignment. It will also guarantee that all three adjustments are made during the manufacturing process. Due to the accuracy that will be attained and the improved level of process control, the need for re-work based on mis-alignment should all but be eliminated.

Another printed circuit board, namely, handle board 180, is inserted through the upper open end of the handle (prior to mounting of the board 104). The handle board includes electronic circuitry which has not been illustrated so as not to unduly encumber the drawings. As shown, however, in FIG. 3, the handle board has a handle connector 182, which is connected by a flexible ribbon cable 184 (see FIGS. 1 and 4) to a corresponding board connector 186 mounted on the upperside of the board 104. FIG. 3 shows the handle board 180 held in place by a first channel-shaped guide 188 integral with the handle 12 and by a second channel-shape guide 190 integral with a multi-function trigger plate 192, as described below.

An electrical cable 200 is connected to the lower end of the handle, and typically contains conductors that carry electrical power, control signals and data signals. The cable extends through a strain relief connector 202 to minimize overflexing of the conductors threat. The connector 202 is mounted at the bottom of the boot 30. The cable terminates in a plug 204 that mates with a corresponding socket 206 on the handle board 180.

An ergonometrically designed dual-finger trigger 210 is pivotably mounted at a lower region thereof on the housing. Trigger 210 has a ridge 212 for separating a user's forefinger from his or her other fingers. The trigger plate 192 has a resilient, integral spring arm 214 for exerting a constant outward biasing force on the trigger. The trigger plate has a lower abutment 216 for supporting a lower bulbous portion 218 of the trigger 210, and an upper abutment 220 for supporting the bulbous portion 218 from above. The bulbous portion is captured between the abutments 216, 220 and the handle, with freedom for the trigger to be depressed in the direction of the arrow C. The trigger plate has a lower end 222 that engages the handle with a snap-type action.

A trigger switch 224 is mounted on the handle board 180. When the trigger 210 is depressed, the switch 224 is also depressed, and an electrical trigger signal is generated by the switch closure, and is used to initiate reading of a symbol.

FIG. 2 schematically shows that the housing 10 is connected via the cable 200 to a decode module 230 and, in turn, through a zero insertion force (ZIF) and smart cable accessory 232 to a host device 234. As is known in this art, the sensor generates an electric signal which must then be decoded and processed. The host device is usually a cash register, computer or data base. Details of the operation of such devices can be had by reference to co-pending U.S. patent application serial no. 08/443,851 filed May 18, 1995 (US-A-5 745 794), and also assigned to the assignee of the instant application.

Returning to FIG. 3, a pair of differently colored light emitting diodes 236, 238 on the board 104 serves as status indicators of system operation. When illuminated, the light from each diode is conducted through a lens or light pipe 240 to and through the liner and the canopy of the cover to visually advise the user of a certain system function. The pipe 240 enhances and optimizes the status lights.

Another type of status indicator is an annunciator or beeper and, as shown in FIGS. 3 and 8, a beeper 242 is mounted on the handle board 180 and, when activated, generates a sound indicative of system operation, for example, that a symbol has been successfully decoded. To optimize the transmission of sound from the beeper to outside the housing, an acoustic resonator 244 is mounted on the board 180 and contains the beeper therein. The resonator is designed to match the acoustical impedance frequency of the beeper, thereby maximizing sound output. Portals can also be strategically formed in the handle adjacent the beeper to magnify the sound output.

A successful decode can thus be indicated visually by a, for example, green light emitted by one of the diodes 236, 238; or by a sound by a beeper; or, in another embodiment, by a vibrator which generates vibrations and transmits the vibrations through the handle to the user's hand in a so-called "silent operating" mode.

FIG. 9 shows still another improvement relating to the window 24. When the housing is used in certain environments where the temperature and/or moisture levels vary, it sometimes happens that the window 24 fogs, thereby interfering with the light that passes in opposite directions through the window. To prevent such fogging, the window is heated, advantageously by attaching or embedding a resistive wire 250 to or in the window 24. A separate switch can be used to supply electrical current from a heater supply 252 to the wire as needed.

Rugged, "snap-able" assemblies have replaced screws where possible. The snap-on cover, snap-in casing, the snap-on printed circuit board (PCB), and the snap-in chassis, and the designing of the heat sink and electro-magnetic interference (EMI) shield as an integral part of the casing 120, eliminated many screws and components from the prior art arrangements. The overall screw count went from ten to three (namely, screws 148, 166, 168).

To further facilitate the assembly, manual soldering was eliminated from the final assembly process. In prior art arrangements, soldering operations included: photodiode to PCB, visible laser diode (VLD) flexible cable to laser diode and PCB, and EMI shield to PCB. By way of a plug-in photodiode and sockets as part of the flex strip cable, soldering and its required skill and equipment are not needed.

Also eliminated was an extra holding component (and additional screw) for the photodiode and optical filter. This was done by holding these components through the PCB with the chassis. This also aids in ease of assembly.

Manual programming and placement of EEPROMS were replaced by "down-loadable" flash EEPROMS. Thus, the operation of an operator batch burning the PROM, handling the PROM to the correct station, and then PROM insertion, are all eliminated (flexibility and variety with insurance). This also allows for software upgrades and servicing without having to open the housing.

Automation is achieved in the final assembly area. The prior art arrangement required three manual adjustments. The operator was relied on to manually set two potentiometers and to visually set a laser beam position.

The required adjustments could not be eliminated (the true goal), but by designing a digital potentiometers, minimal circuitry, and added test points, the adjustments are automatically done electronically. By designing the fixture in parallel with the housing, the necessary requirements are known. The operator loads the chassis, PCB and the components on the chassis as a unit on the fixture, and tells the computer what model is being built, and then presses "go". The adjustment settings are pre-set by model configuration, insuring that the required settings are correct.

Another aspect automated is the Final Acceptance Test (FAT). This test in the past was done by scanning a set of symbols and verifying good decodes based on a trigger pull (decode being a successful reading of the bar code symbol).

By designing this test in parallel with the instant invention, the test fixture will now communicate with the housing to insure the correct PCBs are included and the symbols will be controlled so that incorrect scans are eliminated. The unit software will be written to test the percent decode (actually monitor the number of successful decodes per 50-100 scans), and the fixture will accommodate tolerances that may be required for the pitch and roll of the unit. Various electronic lines will be tested as well, thus adding to the completeness of the test. Thus, the FAT becomes a Systems Acceptance Test (SAT). Parallel process design reduces numerous existing FAT set-ups to only one. Change-over time is virtually eliminated.

Throughout the entire assembly, data is collected through the automated fixture. All adjustment settings and levels are recorded as will any defects and rejects (with potential root cause analysis) to provide accurate design feedback. By designing in these concepts up-front, Statistical Process Control (SPC) is involved from the early stages to aid in operator training, real time process control and total product traceability through the final assembly process.

Assembly of the instant invention is acceptable with a cell or production line of three benches that will consist of two assemblystations operations, and a packaging station.

The stations themselves are balanced (cycle time per station). Capacity was increased by designing the manual assembly and automated portion of each station together in series. For increased capacity, all that is needed is more holding nests for the assembly process to reduce the gating process times. The assembly process is done in parallel with the automated process at a minimum cost (parts will actually be spare parts anyway) at higher capacity.

To accommodate bulky material handling, piece part packaging was developed up front and designed into the production line. This allows the operator to use the piece part packaging as the material bin, eliminating the need to empty one container into another. Designed into this part packaging was a lot (or pan) size that coincided with the production lot size. By packaging to a specific pan size, the need for in-house kitting is eliminated.

Overall, automation is introduced to the final assembly process and the labor is reduced by over 50% as the workstations are reduced from eight to three.

The ease of assembly results in increased quality of the product, which equates to customer satisfaction. Improved material handling reduces costs.

While the present invention has been described and illustrated herein as embodied in a specific construction of a mounting assembly for use in bar code symbol readers, it is not limited to the details of this particular construction.

What is claimed as new and desired to be protected by Letters Patent is set forth in the appended claims.

## Claims

1. A system for electro-optically reading indicia, the system including:
A) a housing (10),
B) a light emitter (122) in the housing (10) for emitting a light beam toward the indicia outside the housing (10),
C) a light sensor (132) in the housing (10) for detecting light from the indicia over a field of view,
D) a scanner (154) in the housing (10) including a light reflector (124, 130) for scanning at least one of said light beam and said field of view, and
E) a circuit board (104) in the housing (10),
**characterised in that** the system further comprises:
a) a chassis (50) snap-mounted in the housing (10) and having a body portion (52) generally lying in a first plane,
b) the circuit board (104) being supported by the chassis (50) and generally lying in a second plane elevated above the first plane, said circuit board (104) having holes (106, 108, 118, 150) extending therethrough; and
c) means (76, 78, 98, 100, 102, 88) extending through the holes (106, 108, 118, 150) for supporting the emitter (122), the sensor (132) and the reflector (124, 130) on the chassis (50) at accessible locations elevated above the first plane and the second plane.

2. The system of claim 1, wherein the housing (10) has a support shell (16), a cover (18) overlying the shell (16) in an assembled condition of use, and a handle (12) for holding the housing (10).

3. The system of claim 2, wherein the shell (16) has an integral heel tab (38) and a pair of integral bearings (64, 66); and wherein the chassis includes a resilient latch (56) for latchingly engaging the heel tab (38), and a pair of stub shafts (60, 62) journaled in the bearings (64, 66).

4. The system of claim 2, wherein the shell (16) has a rear support member (38) and a pair of integral side tabs (42, 44); and wherein the cover (18) has a latching hole (40) for receiving the rear support member (38) and a pair of integral latching posts (46, 48) for latchingly engaging the side tabs (42, 44).

5. The system of claim 2, wherein the circuit board (104) is snap-mounted on the chassis (50).

6. The system of claim 5, wherein the chassis (50) has two pairs of integral resilient arms (80, 82, 94, 96), and wherein the board has apertures (106, 108) through which a first of said pairs of arms (80, 82) extend to engage the board (104) with snap action, and peripheral edges against which a second of said pairs of arms (94, 96) engage with snap action.

7. The system of claim 5, wherein the chassis (50) has rear supports (68, 70) having ledges (72, 74) on which a rear surface of the board (104) rests, and central side wings (84, 86) on which central side surfaces of the board (104) rest.

8. The system of claim 7, wherein the cover (18) has integral posts (110, 112) extending downwardly of the cover and pressing the board (104) against the wings (84, 86) in the assembled condition.

9. The system of claim 2; and further comprising a manually actuatable trigger (210) mounted on the housing (10) for movement relative thereto, said trigger extending at least partly along the handle (12).

10. The system of claim 9, wherein the trigger (210) has a pair of curved fingerholds separated by a raised ridge (212).

11. The system of claim 9, wherein the trigger (210) has a lower pivot portion (218) , and further comprising a trigger plate (192) snap-mounted on the handle (12) and having means (216, 220) for pivotably mounting said lower pivot portion (218) of the trigger.

12. The system of claim 11, wherein the trigger plate (192) has an integral spring arm (214) for urging the trigger away from the housing.

13. The system of claim 2; and further comprising an optical casing (120) having one compartment for receiving the light emitter (122) and means (126, 128) for optically modifying the light beam, and another compartment for receiving the light sensor (132) and means (134) for optically modifying the light from the indicia.

14. The system of claim 13, wherein the casing (120) has co-linear extensions (138, 140) turnable about a turning axis, and wherein the casing has an offset arm (136) extending transversely of the turning axis, and adjusting means (148) accessible from above the chassis (50) for adjusting the position of the arm (136) and, in turn, the position of the light beam.

15. The system of claim 14, wherein the adjusting means includes a spring (152) located between the chassis (50) and the offset arm (136).

16. The system of claim 15, wherein the casing (120) has integral metal wall portions surrounding the light emitter (122) and serving as a heat dissipator therefor, and additional integral metal wall portions surrounding the light detector (132) and serving as an electro-magnetic interference shield therefor.

17. The system of claim 15, wherein the extensions (138, 140) have shaft portions, and wherein the chassis (50) has integral catches (90, 92) for receiving the shaft portions with a snap action.

18. The system of claim 17, wherein the cover (18) has integral holders (176, 178) that overlie the shaft portions of the extensions (138, 140) in the assembled condition.

19. The system of claim 15, wherein the light sensor (132) includes a detector mounted on the chassis, and the modifying means is an optical filter (134) mounted in channel-shaped retainers (98, 100) integral with the chassis (50).

20. The system of claim 2, wherein the reflector (124) includes an oscillatable scan mirror facing the light emitter (122) for reflecting the light beam impinging thereon, and a collecting mirror (130) facing the light sensor (132) for reflecting the light from the indicia impinging thereon; and wherein the scanner includes means (156, 158) for jointly oscillating the mirrors (124, 130) a plurality of times per second.

21. The system of claim 20, wherein the scanner includes a bracket (160) on which the reflector (124) is supported, and wherein the oscillating means includes a permanent magnet (158) mounted on the bracket, and an energizable electromagnetic coil (156) operative, when energized, to attract the permanent magnet (158) and, in turn, to move the bracket (160) with the reflector (124) thereon.

22. The system of claim 21, wherein the scanner (154) includes a frame (162) which extends through the holes (106, 108) and is mounted on the chassis (50).

23. The system of claim 22, wherein the coil (156) has legs (156A, B) to facilitate mounting on the board (104).

24. The system of claim 2, wherein the handle (12) is integral with the shell (16) and bounds an interior handle space in which a printed circuit handle board (180) is received, said handle space having opposite open ends, and further comprising guides (188, 190) for slidably receiving and holding the handle board (180).

25. The system of claim 24, wherein one of the open ends is closeable by an end cap (30) to which an electrical cable (200) is connected; and further comprising strain relief means (202) on the cap (30) to provide strain relief for the cable.

26. The system of claim 25, wherein the shell (16) has a front exterior support portion (28), and wherein the end cap (30) has a rear exterior support portion (32), and wherein the housing (10) is self-supporting on a generally horizontal support surface by resting on said support portions (28, 32).

27. The system of claim 2, wherein the cover (18) has a light-absorbing inner liner and a shock-absorbing exterior canopy (20).

28. The system of claim 27, and further comprising a visual status indicator (236, 238) on the circuit board (104) for generating a status signal, and a light conductor (240) for conducting the status signal from the indicator (236, 238) through the cover (18) for viewing the status signal exteriorly of the housing (10).

29. The system of claim 2, and further comprising a sound status annunciator (242) on the circuit board (104) for generating an acoustic signal, and an acoustic resonator (244) for amplifying the acoustic signal.

30. The system of claim 1, and further comprising a window (24) mounted in the housing, and means (250) associated with the window for heating the window.

31. An in-housing optical adjustment arrangement for use in a system for electro-optically reading indicia, the system including an optical assembly (120) including a light emitter component (122) for emitting a light beam, a light sensor component (132) for detecting light from the indicia over a field of view, and a scanner (154) including a light reflector component (124, 130) for scanning at least one of said light beam and said field of view,
the optical adjustment arrangement comprising :
a) a chassis (50) having a body portion (52) generally lying in a first plane;
b) a printed circuit board (104) supported by the chassis (50) and generally lying in a second plane elevated above the first plane, said circuit board (104) having holes (106, 108, 118, 150) extending therethrough;
c) means (76, 78, 98, 100, 102, 88) extending through the holes (106, 108, 118, 150) for supportably mounting the emitter component (122), the sensor component (132) and the reflector component (124, 130) on the chassis (50) at accessible locations elevated above the first plane and the second plane with accessibility from above the board (104); and
d) means (148) for adjusting the position of at least one of the components.

## Patentansprüche

1. System zum elektro-optischen Lesen von (Kenn-)Zeichen, wobei das System Folgendes umfasst:
A) ein Gehäuse (10),
B) einen Lichtemitter (122) in dem Gehäuse (10) zum Emittieren eines Lichtstrahls zu den (Kenn-)Zeichen außerhalb des Gehäuses (10) hin,
C) einen Lichtsensor (132) in dem Gehäuse (10) zum Detektieren von Licht von den (Kenn-)Zeichen über ein Sichtfeld hinweg,
D) einen Scanner (154) in dem Gehäuse (10) einschließlich eines Lichtreflektors (124, 130) zum Scannen von dem Lichtstrahl und/oder dem Sichtfeld, und
E) eine Leiterplatte (104) in dem Gehäuse (10),
**dadurch gekennzeichnet, dass** das System ferner Folgendes aufweist:
a) ein Gestell (50), das in dem Gehäuse (10) durch Einschnappen angebracht ist und einen Körperteil (52) besitzt, welcher im Allgemeinen in einer ersten Ebene liegt,
b) wobei die Leiterplatte (104) von dem Gestell (50) getragen ist und allgemein in einer zweiten Ebene liegt, die oberhalb der ersten Ebene angeordnet ist, wobei die Leiterplatte (104) sich dahindurch erstreckende Löcher (106, 108, 118, 150) aufweist; und
c) Mittel (76, 78, 98, 100, 102, 88), welche sich durch die Löcher (106, 108, 118, 150) erstrecken zum Tragen des Emitters (122), des Sensors (132) und des Reflektors (124, 130) auf dem Gestell (50), und zwar an zugänglichen Stellen oberhalb der ersten Ebene und der zweiten Ebene.

2. System gemäß Anspruch 1, wobei das Gehäuse (10) eine Tragschale (16), eine Abdeckung (18), welche in einem zusammengebauten Verwendungszustand über der Schale (16) liegt, und einen Handgriff (12) zum Halten des Gehäuses (10) aufweist.

3. System gemäß Anspruch 2, wobei die Schale (16) eine integrierte Rücken- oder Fersenlasche (38) und ein Paar integrierter Lager (64, 66) aufweist; und wobei das Gestell einen elastischen Riegel (56) zum verriegelnden Eingriff mit der Fersenlasche (38) sowie ein Paar von Stummelachsen (60, 62) aufweist, welche in den Lagern (64, 66) gelagert sind.

4. System gemäß Anspruch 2, wobei die Schale (16) ein rückwärtiges Tragglied (38) und ein Paar integraler Seitenlaschen (42, 44) besitzt; und wobei die Abdeckung (18) ein Verriegelungsloch (40) zur Aufnahme des rückwärtigen Tragglieds (38) sowie ein Paar integraler Verriegelungspfosten (46, 48) zum verriegelnden Eingriff mit den Seitenlaschen (42, 44) besitzt.

5. System gemäß Anspruch 2, wobei die Leiterplatte (104) durch Einschnappen auf dem Gestell (50) angebracht ist.

6. System gemäß Anspruch 5, wobei das Gestell (50) zwei Paare integrierter elastischer Arme (80, 82, 94, 96) aufweist, und wobei die Leiterplatte Öffnungen (106, 108) besitzt, durch die sich ein erstes Paar von Armen (80, 82) erstreckt, um mit einer Schnappwirkung mit der Leiterplatte (104) in Eingriff zu kommen, sowie Umfangskanten besitzt, gegen die ein zweites Paar von Armen (94, 96) mit einer Schnappwirkung in Eingriff kommt.

7. System gemäß Anspruch 5, wobei das Gestell (50) rückwärtige Träger (68, 70) besitzt, die Simse bzw. Schultern (72, 74) aufweisen, auf denen eine Rückseite der Leiterplatte (104) ruht, sowie mittige Seitenflügel (84, 86) aufweist, auf denen mittige Seitenoberflächen der Leiterplatte (104) ruhen.

8. System gemäß Anspruch 7, wobei die Abdeckung (18) integrierte Pfosten (110, 112) besitzt, die sich von der Abdeckung nach unten erstrecken und im zusammengebauten Zustand die Leiterplatte (104) gegen die Flügel (84, 86) drücken.

9. System gemäß Anspruch 2, wobei das System ferner einen manuell betätigbaren Auslöser (210) aufweist, welcher auf dem Gehäuse (10) angebracht ist zur Bewegung relativ dazu, wobei der Auslöser sich zumindest teilweise entlang des Handgriffs (12) erstreckt.

10. System gemäß Anspruch 9, wobei der Auslöser (210) ein Paar gekrümmter Fingerauflagen besitzt, die durch einen erhabenen Grat (212) getrennt sind.

11. System gemäß Anspruch 9, wobei der Auslöser (210) einen unteren Schwenkteil (218) besitzt, und wobei das System ferner eine Auslöserplatte (192) aufweist, die durch Einschnappen auf dem Handgriff (12) angebracht ist, sowie Mittel (216, 222) zum schwenkbaren Anbringen des unteren Schwenkteils (218) des Auslösers besitzt.

12. System gemäß Anspruch 11, wobei die Auslöserplatte (192) einen integrierten Federarm (214) besitzt zum Drücken des Auslösers weg von dem Gehäuse.

13. System gemäß Anspruch 2, wobei das System ferner ein optisches Gehäuse (120) aufweist, das ein Abteil zur Aufnahme des Lichtemitters (122) sowie von Mitteln (126, 128) zum optischen Modifizieren des Lichtstrahls aufweist, sowie ein weiteres Abteil zur Aufnahme des Lichtsensors (132) und von Mitteln (134) zum optischen Modifizieren des Licht von den (Kenn-)Zeichen aufweist.

14. System gemäß Anspruch 13, wobei das Gehäuse (120) kolineare Fortsätze (138, 140) besitzt, die um eine Drehachse herum drehbar sind, und wobei das Gehäuse einen Offset- bzw. Ausgleichsarm (136) aufweist, der sich quer zu der Drehachse erstreckt, sowie Einstellmittel (148) aufweist, die von oberhalb des Gestells (50) zugänglich sind, zum Einstellen der Position des Arms (136) und dadurch der Position des Lichtstrahls.

15. System gemäß Anspruch 14, wobei die Einstellmittel eine Feder (152) umfassen, die zwischen dem Gestell (50) und dem Ausgleichsarm (136) angeordnet ist.

16. System gemäß Anspruch 15, wobei das Gehäuse (120) integrierte Metallwandteile besitzt, die den Lichtemitter (122) umgeben und als Wärmeableiter bzw. Kühlkörper dafür dienen, sowie zusätzliche integrierte Metallwandteile umfasst, die den Lichtdetektor (132) umgeben, und als eine Abschirmung hinsichtlich elektro-magnetischer Interferenz dafür dienen.

17. System gemäß Anspruch 15, wobei die Fortsätze (138, 140) Wellenteile besitzen, und wobei das Gestell (50) integrierte Rasten bzw. Fangeinrichtungen (90, 92) besitzt zur Aufnahme der Wellenteile mit einer Schnappwirkung.

18. System gemäß Anspruch 17, wobei die Abdeckung (18) integrierte Halter (176, 178) besitzt, die in dem zusammengebauten Zustand über den Wellenteilen der Fortsätze (138, 140) liegen.

19. System gemäß Anspruch 15, wobei der Lichtsensor (132) einen auf dem Gestell angebrachten Detektor umfasst, und wobei die Modifizierungsmittel ein optischer Filter (134) sind, der in kanalförmigen, integral mit dem Gestell (50) ausgebildeten Haltern (98, 100) angebracht ist.

20. System gemäß Anspruch 2, wobei der Reflektor (124) einen schwingbaren Scan-Spiegel umfasst, der zum Lichtemitter (122) weist zum Reflektieren des darauf auftreffenden Lichtstrahls, sowie einen Sammelspiegel (130) aufweist, der zu dem Lichtsensor (132) weist zum Reflektieren des von den (Kenn-)Zeichen darauf auftreffenden Lichts; und wobei der Scanner Mittel (156, 158) zum gemeinsamen Schwingen der Spiegel (124, 130) einen Vielzahl von Malen pro Sekunde umfasst.

21. System gemäß Anspruch 20, wobei der Scanner einen Bügel (160) umfasst, auf dem der Reflektor (124) getragen ist, und wobei die Schwingmittel einen auf dem Bügel angebrachten Permanentmagneten (158) und eine erregbare elektro-magnetische Spule (156) umfasst, wobei die Spule bei Erregung den Permanentmagneten (158) anzieht und dieser seinerseits den Bügel (160) mit dem Reflektor (124) darauf bewegt.

22. System gemäß Anspruch 21, wobei der Scanner (154) einen Rahmen (162) umfasst, der sich durch die Löcher (106, 108) erstreckt und auf dem Gestell (50) angebracht ist.

23. System gemäß Anspruch 22, wobei die Spule (156) Füße (156A, 156B) besitzt, um ein Anbringen auf der Leiterplatte (104) zu erleichtern.

24. System gemäß Anspruch 2, wobei der Handgriff (12) mit der Schale (16) integriert ist und einen inneren Handgriffraum begrenzt, in dem eine gedruckte Handgriffleiterplatte (180) aufgenommen ist, wobei der Handgriffraum entgegengesetzte offene Enden besitzt und ferner Führungen (188, 190) aufweist zum gleitenden Aufnehmen und Halten der Handgriffleiterplatte (180).

25. System gemäß Anspruch 24, wobei eines der offenen Enden durch eine Endkappe (30), mit der ein elektrisches Kabel (200) verbunden ist, verschließbar ist; und wobei das System ferner Zugentlastungsmittel (202) auf der Kappe (30) aufweist, um eine Zugentlastung für das Kabel vorzusehen.

26. System gemäß Anspruch 25, wobei die Schale (16) einen vorderen, äußeren Tragteil (28) besitzt, und wobei die Endkappe (30) einen hinteren, äußeren Tragteil (32) aufweist, und wobei das Gehäuse (10) selbst tragend ist auf einer allgemein horizontalen Tragoberfläche durch Ruhen auf den Tragteilen (28, 32).

27. System gemäß Anspruch 2, wobei die Abdeckung (18) eine lichtabsorbierende innere Auskleidung und eine schlagabsorbierende äußere Umhüllung (20) aufweist.

28. System gemäß Anspruch 27, wobei das System ferner eine visuelle Statusanzeige (236, 238) auf der Leiterplatte (104) zum Erzeugen eines Statussignals sowie einen Lichtleiter (240) zum Leiten des Statussignals von der Anzeige (236, 238) durch den Deckel (18) aufweist, und zwar zur Ansicht des Statussignals von außerhalb des Gehäuses (10).

29. System gemäß Anspruch 2, wobei das System ferner einen akustischen Statussignalgeber (242) auf der Leiterplatte (104) zum Erzeugen eines akustischen Signals sowie eine akustischen Resonanzraum bzw. Resonator (244) zum Verstärken des akustischen Signals aufweist.

30. System gemäß Anspruch 1, wobei das System ferner ein in dem Gehäuse angebrachtes Fenster (24) und mit dem Fenster assoziierte Mittel (250) zum Heizen des Fensters aufweist.

31. Anordnung zur optischen Einstellung im Gehäuse zur Verwendung in einem System zum elektro-optischen Lesen von (Kenn-)Zeichen, wobei das System eine optische Anordnung (120) umfasst, die einen Lichtemitterkomponente (122) zum Emittieren eines Lichtstrahls, eine Lichtsensorkomponente (132) zum Detektieren von Licht von den (Kenn-) Zeichen über ein Sichtfeld hinweg umfasst, sowie einen Scanner (154) umfasst, welcher eine Lichtreflektorkomponente (124, 130) umfasst, zum Scannen von dem Lichtstrahl und/oder dem Sichtfeld, wobei die optische Einstellanordnung Folgendes aufweist:
a) ein Gestell (50) mit einem Körperteil (52), der allgemein in einer ersten Ebene liegt;
b) eine gedruckte Leiterplatte (104), die von dem Gestell (50) getragen ist und allgemein in einer zweiten Ebene oberhalb der ersten Ebene liegt, wobei die Leiterplatte (104) sich dahindurch erstreckende Löcher (106, 108, 118, 150) aufweist;
c) sich durch die Löcher (106, 108, 118, 150) erstreckende Mittel (76, 78, 98, 100, 102, 88) zum tragenden Anbringen der Emitterkomponente (122), der Sensorkomponente (132) und der Reflektorkomponente (124, 130) auf dem Gestell (50) an zugänglichen Stellen oberhalb der ersten Ebene und der zweiten Ebene mit einer Zugriffsfähigkeit von oberhalb der Leiterplatte (104); und
d) Mittel (148) zum Einstellen der Position von mindestens einer der Komponenten.

## Revendications

1. Système pour lire électro-optiquement des signes, le système comprenant :
A) un boîtier (10),
B) un émetteur de lumière (122) dans le boîtier (10) pour émettre un faisceau lumineux vers les signes à l'extérieur du boîtier (10),
C) un capteur de lumière (132) dans le boîtier (10) pour détecter la lumière provenant du signe dans un champ de visée,
D) un dispositif à balayage (154) dans le boîtier (10) comprenant un réflecteur de lumière (124, 130) pour balayer au moins l'un dudit faisceau lumineux et dudit champ de visée, et
E) une carte à circuit (104) dans le boîtier (10),
**caractérisé en ce que** le système comprend de plus :
a) un châssis (50) encliqueté dans le boîtier (10) et possédant une partie de corps (52) étendue généralement dans un premier plan,
b) la carte à circuit (104) étant supportée par le châssis (50) et étendue généralement dans un second plan élevé au-dessus du premier plan, ladite carte à circuit (104) étant traversée de trous (106, 108, 118, 150); et
c) des moyens (76, 78, 98, 100, 102, 88) passant dans les trous (106, 108, 118, 150) pour supporter l'émetteur (122), le capteur (132), et le réflecteur (124, 130) sur le châssis (50) en des endroits accessibles situés au-dessus du premier plan et du second plan.

2. Système selon la revendication 1, dans lequel le boîtier (10) possède une coque de support (16), un couvercle (18) recouvrant la coque (16) dans les conditions d'utilisation, quand il est assemblé, et une poignée (12) pour tenir le boîtier (10).

3. Système selon la revendication 2, dans lequel la coque (16) possède une griffe de talon intégrée (38) et une paire de paliers intégrés (64, 66) ; et dans lequel le châssis comprend une pièce de verrouillage élastique (56) pour encliqueter la griffe de talon (38), et une paire d'axes (60, 62) engagés dans les paliers (64, 66).

4. Système selon la revendication 2, dans lequel la coque (16) possède un élément de support arrière (38) et une paire de griffes latérales intégrées (42, 44) ; et dans lequel le couvercle (18) possède un trou de verrouillage (40) pour recevoir l'élément de support arrière (38) et une paire de montants de verrouillage intégrés (46, 48) pour se verrouiller avec les griffes latérales (42, 44).

5. Système selon la revendication 2, dans lequel la carte à circuit (104) est encliquetée sur le châssis (50).

6. Système selon la revendication 5, dans lequel le châssis (50) possède deux paires de bras élastiques intégrés (80, 82, 94, 96), et dans lequel la carte possède des ouvertures (106, 108) à travers lesquelles une première desdites paires de bras (80, 82) passe pour engager la carte (104) par encliquetage, et des bords périphériques contre lesquels une seconde desdites paires de bras (94, 96) vient s'engager par encliquetage.

7. Système selon la revendication 5, dans lequel le châssis (50) possède des supports arrières (68, 70) possédant des saillies (72, 74) sur lesquelles une surface arrière de la carte (104) repose, et des ailettes latérales centrales (84, 86) sur lesquelles les surfaces latérales centrales de la carte (104) reposent.

8. Système selon la revendication 7, dans lequel le couvercle (18) possède des montants intégrés (110, 112) descendant du couvercle et pressant la carte (104) contre les ailettes (84, 86) quand l'assemblage est réalisé.

9. Système selon la revendication 2 ; et comprenant de plus une gâchette actionnable manuellement (210) montée sur le boîtier (10) de façon à se déplacer par rapport à lui, ladite gâchette s'étendant au moins partiellement le long de la poignée (12).

10. Système selon la revendication 9, dans lequel la gâchette (210) possède une paire de prises incurvées pour les doigts, séparées par une arête en relief (212).

11. Système selon la revendication 9, dans lequel la gâchette (210) possède une partie de pivot basse (218), et comprend de plus une plaque de gâchette (192) encliquetée sur la poignée (12) et possédant des moyens (216, 220) pour le montage pivotant de ladite partie de pivot basse (218) de la gâchette.

12. Système selon la revendication 11, dans lequel la plaque de gâchette (192) possède un bras à ressort intégré (214) pour repousser la gâchette à l'écart du boîtier.

13. Système selon la revendication 2 ; comprenant de plus une enveloppe optique (120) possédant un compartiment pour recevoir l'émetteur de lumière (122) et un moyen (126, 128) pour modifier optiquement le faisceau lumineux, et un autre compartiment pour recevoir le capteur de lumière (132) et un moyen (134) pour modifier optiquement la lumière provenant du signe.

14. Système selon la revendication 13, dans lequel l'enveloppe (120) possède des prolongements colinéaires (138, 140) pouvant tourner autour d'un axe de rotation, et dans lequel l'enveloppe possède un bras décalé (136) s'étendant transversalement à l'axe de rotation, et un moyen d'ajustement (148) accessible par le dessus du châssis (50) pour ajuster la position du bras (136) et, à son tour, la position du faisceau lumineux.

15. Système selon la revendication 14, dans lequel le moyen d'ajustement comprend un ressort (152) logé entre le châssis (50) et le bras décalé (136).

16. Système selon la revendication 15, dans lequel l'enveloppe (120) possède des parties de la paroi métallique intégrées entourant l'émetteur de lumière (122) et lui servant de dissipateur de chaleur, et des parties de la paroi métallique intégrées supplémentaires entourant le capteur de lumière (132) et lui servant de bouclier anti-interférence électromagnétique.

17. Système selon la revendication 15, dans lequel les prolongements (138, 140) possèdent des parties d'axe, et dans lequel le châssis (50) possède des pièces d'accrochage intégrées (90, 92) pour recevoir les parties d'axe par encliquetage.

18. Système selon la revendication 17, dans lequel le couvercle (18) possède des pièces de maintien intégrées (176, 178) qui viennent se placer au-dessus des parties d'axe des prolongements (138, 140) quand l'assemblage est réalisé.

19. Système selon la revendication 15, dans lequel le capteur de lumière (132) comprend un détecteur monté sur le châssis, et le moyen de modification est un filtre optique (134) monté dans des maintiens en forme de canal (98, 100) intégrés au châssis(50).

20. Système selon la revendication 2, dans lequel le réflecteur (124) comprend un miroir de balayage oscillant faisant face à l'émetteur de lumière (122) pour réfléchir le faisceau lumineux l'atteignant, et un miroir collecteur (130) faisant face au capteur de lumière (132) pour réfléchir la lumière qu'il reçoit du signe ; et dans lequel le dispositif de balayage comprend un moyen (156, 158) pour faire osciller de manière conjointe les miroirs (124, 130) plusieurs fois par seconde.

21. Système selon la revendication 20, dans lequel le dispositif de balayage comprend un support (160) sur lequel le réflecteur (124) est monté, et dans lequel le moyen d'oscillation comprend un aimant permanent (158) monté sur le support, et une bobine électromagnétique qu'on peut mettre sous tension (156) fonctionnant, quand elle est mise sous tension, pour attirer l'aimant permanent (158) et, à son tour, pour déplacer le support (160) portant le réflecteur (124).

22. Système selon la revendication 21, dans lequel le dispositif de balayage (154) comprend un cadre (162) qui s'étend à travers les trous (106, 108) et est monté sur le châssis (50).

23. Système selon la revendication 22, dans lequel la bobine (156) possède des pieds (156A, B) pour faciliter le montage sur la carte (104).

24. Système selon la revendication 2, dans lequel la poignée (12) est intégrée à la coque (16) et délimite un espace intérieur de poignée dans lequel une carte de poignée à circuit imprimé (180) prend place, ledit espace de poignée possédant des extrémités opposées ouvertes, et comprenant de plus des guides (188, 190) pour recevoir par coulissement et maintenir la carte de poignée (180).

25. Système selon la revendication 24, dans lequel une des extrémités ouvertes peut être fermée par un capuchon d'extrémité (30) auquel un câble électrique (200) est connecté ; et comprenant de plus un moyen de soulagement de contrainte (202) sur le capuchon (30) pour fournir un soulagement au câble.

26. Système selon la revendication 25, dans lequel la coque (16) possède une partie de support externe avant (28) et dans lequel le capuchon d'extrémité (30) possède une partie de support externe arrière (32) et dans lequel le boîtier (10) peut reposer sur une surface de support à peu près horizontale en reposant sur lesdites parties de support (28, 32) .

27. Système selon la revendication 2, dans lequel le couvercle (18) possède un revêtement interne absorbant la lumière et un parement extérieur (20) absorbant les chocs.

28. Système selon la revendication 27, et comprenant de plus un indicateur d'état visuel (236, 238) sur la carte à circuit (104) pour générer un signal d'état, et un conducteur de lumière (240) pour conduire le signal d'état de l'indicateur (236, 238) à travers le couvercle (18) pour permettre de voir le signal d'état à l'extérieur du boîtier (10).

29. Système selon la revendication 2, et comprenant de plus un annonceur d'état sonore (242) sur la carte à circuit (104) pour générer un signal acoustique, et un résonateur acoustique (244) pour amplifier le signal acoustique.

30. Système selon la revendication 1, et comprenant de plus une fenêtre (24) montée sur le boîtier, et un moyen (250) associé à la fenêtre pour chauffer la fenêtre.

31. Agencement d'ajustement optique interne à un boîtier destiné à être utilisé dans un système pour lire électro-optiquement des signes, le système comprenant un ensemble optique (120) comprenant un composant émetteur de lumière (122) pour émettre un faisceau lumineux, un composant capteur de lumière (132) pour détecter la lumière provenant du signe dans un certain champ de visée, et un dispositif de balayage (154) comprenant un composant réflecteur de lumière (124, 130) pour balayer au moins l'un dudit faisceau lumineux et dudit champ de visée,
l'agencement d'ajustement optique comprenant :
a) un châssis (50) possédant une partie de corps (52) s'étendant généralement dans un premier plan ;
b) une carte à circuit imprimé (104) supportée par le châssis (50) et s'étendant généralement dans un second plan situé au-dessus du premier plan, ladite carte à circuit (104) étant traversée de trous (106, 108, 118, 150) ;
c) des moyens (76, 78, 98, 100, 102, 88) s'étendant dans les trous (106, 108, 118, 150) pour supporter le composant émetteur (122), le composant capteur (132) et le composant réflecteur (124, 130) sur le châssis (50) à des endroits accessibles se situant au-dessus du premier plan et du second plan avec une accessibilité par le dessus de la carte (104) ; et
d) un moyen (148) pour ajuster la position d'au moins l'un des composants.
